# EUROPEAN PATENT SPECIFICATION

(11) **EP 2 578 063 B1**
(45) Date of publication and mention of the grant of the patent: **05.10.2016**
(21) Application number: 11727784.8
(22) Date of filing: 20.05.2011
(51) Int. Cl.: H05B 37/02

(54) **A METHOD AND SYSTEM FOR CONTROLLING THE STATUS OF A DEVICE**
VERFAHREN UND SYSTEM ZUR STEUERUNG DES ZUSTANDS EINER VORRICHTUNG
PROCÉDÉ ET SYSTÈME DESTINÉS À VÉRIFIER L'ÉTAT D'UN DISPOSITIF

(30) Priority: 01.06.2010 EP 10164588
(43) Date of publication of application: 10.04.2013
(73) Proprietor: TP Vision Holding B.V., 1097 JB Amsterdam (NL)
(72) Inventor: DAMSTRA, Arjen Siebrand, 1097 JB Amsterdam (NL)
(74) Representative: DREISS Patentanwälte PartG mbB
(86) International application number: PCT/IB2011/052212
(87) International publication number: WO 2011/151754

(56) References cited:
- LEVITON: "Occupancy Sensor Ultrasonic Ceiling Sensor", 1 January 2010 (2010-01-01), PAGE(S) 1 - 2, XP007919633, [retrieved on 2011-10-26] the whole document
- LEVITON: "Ultrasonic Ceiling Mounted Occupancy Sensor", 1 January 2010 (2010-01-01), PAGE(S) 1 - 2, XP007919634, [retrieved on 2011-10-26] the whole document
- WESCO: "Esco Buyers Guide 2009/2010 - Your premier source for electrical products and more", 1 January 2008 (2008-01-01), 20080101, PAGE(S) 1(441) - 3, XP007919640, [retrieved on 2011-10-26] page 441
- WESCO GO GREEN: "Wesco Electrical & MRO Green Guide Information Solution Direction", 1 January 2009 (2009-01-01), 20090101, PAGE(S) 1(58,112) - 4, XP007919641, [retrieved on 2011-10-26] pages 58, 112
- LEVITON: "Occupancy Sensors Product Guide", 1 January 2005 (2005-01-01), 20050101, PAGE(S) 1 - 24, XP007919639, [retrieved on 2011-10-26] page 11
- PHILIPS: "OccuSwitch Classic Low Voltage Infrared Occupancy Sensor (LRM2270)", 1 January 2011 (2011-01-01), 20110101, PAGE(S) 1 - 2, XP007919636, [retrieved on 2011-10-26] the whole document
- PHILIPS: "Infrared Wall Mounted Occupancy Sensor", 1 January 2011 (2011-01-01), 20110101, PAGE(S) 1 - 2, XP007919635, [retrieved on 2011-10-26] the whole document
- PHILIPS: "OccuSwitch Classic Infrared Ceiling Sensor LRM2250", 1 January 2011 (2011-01-01), 20110101, PAGE(S) 1 - 2, XP007919638, [retrieved on 2011-10-26] the whole document
- PHILIPS: "Infrared Ceiling Mounted Occupancy Sensor", 1 January 2011 (2011-01-01), 20110101, PAGE(S) 1 - 2, XP007919637, [retrieved on 2011-10-26] the whole document

## Description

### FIELD OF THE INVENTION

The present invention relates to a method and system for controlling the status of at least one device.

### BACKGROUND OF THE INVENTION

Presence detection systems are used to reduce power consumption by changing the status of a device (for example, turning a device off, dimming lighting, etc) depending on whether a user is present (for example, in the vicinity of a device or in a room). Presence detection systems can be found in many environments such as in office lighting and in consumer electronics (e.g. TV). In many cases, a presence detection system is based on a motion detector and a timeout setting. Whenever the motion detector determines there is motion, the state is set to 'Presence' and a timer is set to zero. When there is a time of no motion, the timer increases. When the timer has reached a predefined maximum, the state is set to 'No presence'.

In the case of TV, a presence detector will decrease the light output whenever there is no presence. When light output is decreased, power consumption is reduced, which is beneficial for the consumer. However, the presence detector often detects false positives, where presence is detected and the light output is increased but the person is not actually present. The energy saving that is gained is decreased by the detection of false positives.

The presence detector also suffers from the detection of false negatives where no presence is detected and the light output is reduced but the person is actually present. False negatives are annoying to the user when they occur since a device will be turned off or lighting will be dimmed when the user is present but has not moved for a prolonged period of time.

US 6,756,998 discloses a home automation system that attempts to avoid false negatives and positives by triggering room motion sensors only if a certain number of motions are detected separated by a certain time period and all occurring within a certain time period, e.g. three separate movements separated by at least two seconds all within 15 seconds.

However, this system excludes certain activities that do not fulfil the strict criteria for being defined as movement to trigger the sensors. For example, a user may be reading a book where movement of the user is only likely to be detected each time the user turns a page in the book. Although three separate movements of the user turning a page in the book may be detected separated by at least two seconds, it is unlikely that these movements would all occur within 15 seconds. Therefore, the system would determine that the user is not present when they actually are.

The LEVITON Occupancy Sensors Product Guide dated 1 January 2005, describes at page 17 that in their sensing technology a "dedicated internal microprocessor continually analyzes the room environment and adjusts itself automatically. The internal timer, detection sensitivity and thresholds are automatically adjusted." The sensors presented in this product guide include the type range OSCxx-U. Possible implementations for this automatic adjustment are described in two undated product specifications. These are LEVITON: "Occupancy Sensor Ultrasonic Ceiling Sensor", 1 January 2011 (2011 -01 -01), 20110101, PAGE(S) 1 - 2, XP007919633, [retrieved on 2011-10-26] (Specification 1) and LEVITON: "Ultrasonic Ceiling Mounted Occupancy Sensor", 1 January 201 (2011 -01 -01), 20110101, PAGE(S) 1 - 2, XP007919634, [retrieved on 2011-10-26] (Specification 2). According to specification 1 occurrence of False-Off is countered by the following adaptive reaction:" If motion is sensed within a short period after the lights go off, then the current delayed off-time setting is increased."Furthermore, occurrence of False-On is countered by the following adaptive reaction:"After an initial movement is sensed, if another movement is not sensed within the timer setting then the delayed off time setting is automatically reduced". Product specification 2 for the type range OSCxx-U states:" The sensor will automatically change the delayed off time in response to the occupancy and environmental conditions of the space it is installed in. The sensor analyzes the motion signal properties and will minimize the delayed off time duration when there is frequent motion detection, and lengthen the delayed off time duration when there is weak and infrequent motion detection.

In the case of a false-off condition (lights turn off when the room is occupied), the delayed off time duration will immediately be lengthened to prevent further false turn
offs." There is therefore a need for an improved system that avoids false negatives and false positives.

### SUMMARY OF THE INVENTION

The invention seeks to provide an improved method and system that avoids false negatives (when the user is actually present but the system detects that they are not and turns the device(s) off) and false positives (when the user is not present but the system detects that they are and leaves the device(s) on).

This is achieved, according to one aspect of the present invention, by a method for controlling the status of at least one device, the method comprising the steps of: (a) starting a timer; (b) resetting the timer upon detecting the presence of a user; (c) changing the status of at least one device if no motion of the user is detected before the timer reaches a predetermined value; and (d) increasing the predetermined value if motion of the user is detected within a predetermined time interval of the change of the status of the at least one device in step (c), said detection in step (d) indicating a false-negative, further comprising the step of (e) automatically decreasing the predetermined value after a predetermined time, characterized in that the predetermined time is counted from the moment of the latest detection of a false negative.

This is also achieved, according to a second aspect of the present invention, by system for controlling the status of at least one device, the system comprising: a timer; and a controller operable to: (a) start the timer; (b) reset the timer upon detecting the presence of a user; (c) change the status of at least one device if no motion of the user is detected before the timer reaches a predetermined value; and (d) increase the predetermined value if motion of the user is detected within a predetermined time interval of the change of the status of the at least one device in step (c) said detection in step (d) indicating a false-negative, further comprising the step of (e) the controller further being operable to automatically decrease the predetermined value after a predetermined time, characterized in that the predetermined time is counted from the moment of the latest detection of a false negative.

In this way, false negatives are prevented by increasing the setting for predetermined value that the timer can reach (i.e. the timer maximum). The system automatically learns from mistakes in detecting that a user is present when they are actually not present and in detecting that a user is not present when they actually are present. This is possible since the system looks at the amount of time between a state change from presence to no presence and a state change between no presence and presence to learn whether the decision was correct or a false negative. By clever choice of the predetermined value (or maximum value), a balance is achieved which minimises false positives and false negatives as such the system is "self learning" and finds the optimal balance.

The user may be allowed to change the predetermined value. In this way, a user can personalise the system and alter the balance between the system detecting presence or no presence and hence reduce false positives and false negatives.

The predetermined value is automatically decreased if there has not been a false negative detected for a predetermined time.

An indication may be provided that step (d) has occurred. The user is therefore provided with information as to the status of the system.

### BRIEF DESCRIPTION OF THE DRAWINGS

For a better understanding of the invention, and to show more clearly how it may be carried into effect, reference will now be made, by way of example only, to the accompanying drawings in which:
Figure 1 is a simplified schematic of system for controlling the status of a device; and
Figure 2 is a flowchart of a method for controlling the status of a device.

### DETAILED DESCRIPTION

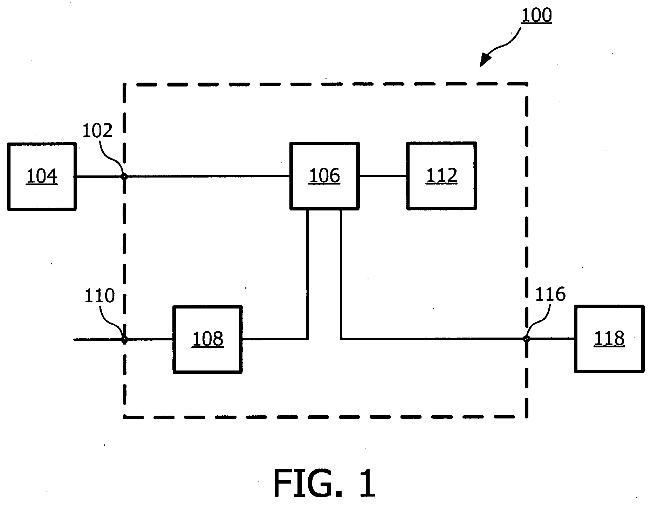

With reference to Figure 1, the system 100 comprises a detector 104 for detecting the motion of a user. The detector 104 may be a Passive Infrared (PIR) sensor used as motion detector. Alternatively, the detector 104 may be an ultrasound motion detector or camera based motion detector or it may detect activation of a button on a remote control device, plugging a USB into a TV or like device or any combination thereof. The PIR sensor has a digital output where motion is represented as 1 and no. motion is represented as 0. The output of the detector 104 in communication with a controller 106 via a first input terminal 102. The controller 106 may be a microcontroller. The controller 106 is connected to a user interface 108 that receives a user input via a second input terminal 110. The output of the controller 106 is connected to a timer 112. The output of the controller 106 provides a control signal to a controllable device 118 via an output terminal 116.

The controller 106 may be wirelessly connected to or wired to the controllable device 118. Also, the detector 104 may be integrated in the controllable device 118 or may be separate from the controllable device 118 and wirelessly connected to or wired to the controllable device 118. Alternatively, the whole system 100 may be integrated in the controllable device 118. The device 118 may be, for example, a TV, a lighting system, a DVD player, a sound system, domestic appliances, etc.

The system 100 may control more than one controllable device 118.

The system 100 may further include an indicator for causing the controllable device 118 to provide an indication to a user. Alternatively, the controllable device 118 may include the indicator and the processor 106 of the system 100 may control the indicator.

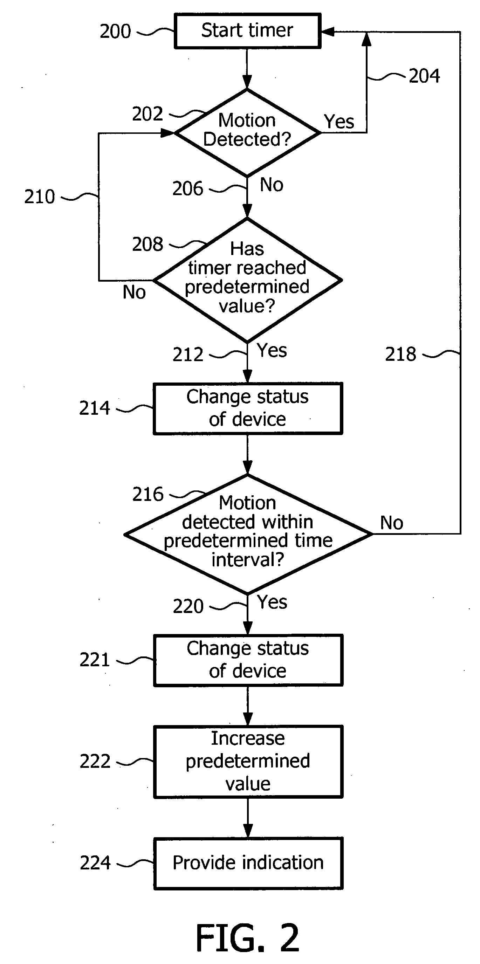

The operation of the system 100 will now be described with reference to the flowchart shown in Figure 2.

The controller 106 starts the timer 112 (step 200). The controller 106 may, for example, start the timer 112 in response to the detector 104 detecting no motion of the user within a certain time interval.

The controller 106 determines whether the detector 104 detects motion of a user (step 202). If the detector 104 detects motion of a user, the controller 106 resets the timer 112 (step 204). The controller 106 resets the timer 112 each time the detector 104 detects the motion of a user. The detection of motion of a user signifies the presence of a user, whereas the absence of motion of a user over a prolonged period of time signifies no presence of the user. The timer may be reset to 0 and count upwards to a predetermined value or alternatively, the timer may reset to the predetermined value and count downwards to 0.

If the detector 104 detects no motion of a user via the first input terminal 102 (step 206), the controller determines whether the timer 112 has reached a predetermined value (step 208). If the timer 112 has not reached the predetermined value (step 210), the controller 106 returns to the step of determining whether the detector 104 has detected motion of a user (step 202).

If the timer 112 has reached the predetermined value (step 212), the controller 106 changes the status of the device 118 via the output terminal 116 (step 214), that is the controller 106 changes the status of the device 118 via the output terminal 116 (step 214) if the detector 104 detects no motion of the user (step 206) before the timer 112 reaches the predetermined value (step 212).

For example, the controller 106 may change the status of the device 118 from "ON" to "OFF" if the detector 104 detects no motion (and hence no presence) of the user before the timer 112 reaches a predetermined value. Alternatively, in the case of a lighting system, the controller 106 may change the status of the device 118 by dimming the lighting if the detector 104 detects no motion of the user before the timer 112 reaches a predetermined value. This saves power when the user is not present and avoids false negatives, which would occur if the lights were dimmed when a user was still present.

The predetermined value may be defined by a user input received by the user interface 108 via the second input terminal 110 and may be, for example, 5 minutes, 30 minutes, 1 hour, etc.

In some cases, where the controller 106 changes the status of the device 118 to "OFF", the controller 106 may also control the detector 104 to change the status of the detector 104 to "OFF". In this case, the detector 104 and the device 118 would need to be switched on again manually. The controller 106 would then restart the timer 112 and the process (steps 200 to 214) would be repeated.

The system 100 may control more than one controllable device 118 such that the controller 106 changes the status of more than one controllable device 118 if the detector 104 detects no motion of the user before the timer 112 reaches a predetermined value. In this case, the predetermined value of the timer may be defined differently for different devices. For example, the predetermined value of the timer defined for lighting may be different to the predetermined value of the timer defined for the volume or illumination of the TV.

The controller 106 determines whether the detector 104 detects motion of the user within a predetermined time interval of the change of the status of the device (step 216). If the detector 104 detects no motion of the user within a predetermined time interval of the change of the status of the device (step 218), the process (steps 200 to 214) is repeated.

If the detector 104 detects motion of the user within a predetermined time interval of the change of the status of the device (step 220), the status of the device is changed (step 22), invariably reverted back to its previous status, for example, increasing light output, volume or turning the device "ON" etc. The controller 106 then increases the predetermined value (step 222). For example, the controller 106 may have changed the status of the device 118 from "ON" to "OFF" as a result of the detector 104 detecting no motion of the user (and hence no presence) before the timer 112 reaches a predetermined value. However, within 5 seconds of this status change, the detector 104 may detect motion of a user (and hence presence). This signifies that the user was annoyed by a false negative since the user has reacted fast by moving soon after the status of the device 118 was changed from "ON" to "OFF". In such a case, the controller 106 changes the status of the device 118 back from "OFF" to "ON" and at the same time, increases the predetermined value.

Alternatively, the controller 106 increases the predetermined value if the detector 104 detects that the user changes the status of the device 118 manually within a predetermined amount of time after the controller 106 has automatically changed the status of the device 118. For example, the controller 106 may have changed the status of the device 118 from "ON" to "OFF" as a result of the detector 104 detecting no motion of the user (and hence no presence) before the timer 112 reaches a predetermined value. However, within 5 seconds of this status change, the user may manually turn the device back on. This signifies that the user was annoyed by a false negative since the user has reacted to turn the device back on soon after the status of the device 118 was changed from "ON" to "OFF". In such a case, the controller 106 increases the predetermined value.

The controller 106 will increase the timer maximum whenever a false negative is detected in this way. The controller 106 will increase the timer maximum by, for example, 10 minutes every time a false negative is detected.

The controller 106 automatically decreases the predetermined value after a predetermined time. In particular, the controller 106 automatically decreases the predetermined value where there has not been a false negative detected for a prolonged time. Alternatively, the controller 106 decreases the predetermined value responsive to a user input received by the user interface 108 via the second input terminal 110.

The controller 106 controls the indicator to provide an indication to be rendered on the controllable device 118, indicating that the predetermined value has been increased (step 224). Alternatively, the controller 106 controls the indicator to provide an indication to be rendered by the system 100 itself. The indication may be, for example, an audio indication such as a buzzer or a visual indication such as a light. The indication may include content to be rendered on a screen or through audio and may include an explanation apologising for the wrong decision and/or an explanation that measures have been taken to avoid this situation from happening again (i.e. by increasing the timer maximum) in the form of a text display or vocal message.

Although embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

'Means', as will be apparent to a person skilled in the art, are meant to include any hardware (such as separate or integrated circuits or electronic elements) or software (such as programs or parts of programs) which reproduce in operation or are designed to reproduce a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A method for controlling the status of at least one device (118), the method comprising the steps of:
(a) starting (200) a timer (112);
(b) resetting (204) the timer (112) upon detecting the presence of a user;
(c) changing (214) the status of at least one device (118) if no motion of the user is detected before the timer reaches a predetermined value;
(d) increasing (222) the predetermined value if motion of the user is detected within a predetermined time interval of the change of the status of the at least one device (118) in step (c), said detection in step (d) indicating a false-negative, further comprising the step of (e) automatically decreasing the predetermined value after a predetermined time, **characterized in that** the predetermined time is counted from the moment of the latest detection of a false negative.

2. A method according to claim 1, further comprising allowing a user to change the predetermined value.

3. A method according to claim 1, further comprising providing (224) an indication that step (d) has occurred.

4. A computer program product comprising a plurality of program code portions for carrying out the method according to any one of the preceding claims.

5. A system (100) for controlling the status of at least one device (118), the system comprising:
a timer (112); and
a controller (106) operable to:
(a) start (200) the timer (112);
(b) reset (204) the timer (112) upon detecting the motion of a user;
(c) change (214) the status of at least one device (118) if no motion of the user is detected before the timer reaches a predetermined value;
(d) increase (222) the predetermined value if motion of the user is detected, within a predetermined time interval of the change of the status of the at least one device (118) in step (c), said detection in step (d) indicating a false negative and the controller further being operable to
(e) automatically decrease the predetermined value after a predetermined time,
**characterized in that** the predetermined time is counted from the moment of the latest detection of a false negative.

6. A system (100) according to claim 5 further comprising a user interface (108) for receiving a user input to define the predetermined value.

7. A system (100) according to claim 5 further comprising an indicator for providing (224) an indication that step (d) has occurred.

8. A system (100) according to claim 5 further comprising a detector (104) for detecting the motion of a user.

## Patentansprüche

1. Verfahren zur Steuerung des Zustands mindestens einer Vorrichtung (118), wobei das Verfahren folgende Schritte beinhaltet:
(a) Starten (200) eines Zeitgliedes (112);
(b) Zurücksetzen (204) des Zeitgliedes (112) beim Detektieren der Anwesenheit eines Benutzers;
(c) Ändern (214) des Zustands mindestens einer Vorrichtung (118), falls keine Bewegung des Benutzers detektiert wird, bevor das Zeitglied einen vorgegebenen Wert erreicht;
(d) Erhöhen (222) des vorgegebenen Wertes, falls eine Bewegung des Benutzers innerhalb eines vorgegebenen Zeitintervalls seit der Änderung des Zustands der mindestens einen Vorrichtung (118) in Schritt (c) detektiert wird, wobei eine Detektierung in Schritt (d) Falsch-Negativ anzeigt, ferner den Schritt (e) automatisches Verringern des vorgegebenen Wertes nach einer vorgegebenen Zeit beinhaltend, **dadurch**
**gekennzeichnet, dass** die vorgegebene Zeit ab dem Moment der letzten Detektierung von Falsch-Negativ gezählt wird.

2. Verfahren nach Anspruch 1, ferner beinhaltend, dass einem Benutzer erlaubt wird, den vorgegebenen Wert zu ändern.

3. Verfahren nach Anspruch 1, ferner das Bereitstellen (224) einer Anzeige, dass Schritt (d) stattgefunden hat, beinhaltend.

4. Rechnerprogramm, eine Vielzahl von Programmcodeteilen zum Durchführen des Verfahrens nach einem der vorangegangenen Ansprüche beinhaltend.

5. System (100) zur Steuerung des Zustands mindestens einer Vorrichtung (118), wobei das System aufweist:
ein Zeitglied (112); und
eine Steuerung (106), die betreibbar ist, um:
(a) das Zeitglied (112) zu starten (200);
(b) das Zeitglied (112) beim Detektieren der Bewegung eines Benutzers zurückzusetzen (204);
(c) den Zustand mindestens einer Vorrichtung (118) zu ändern (214), falls keine Bewegung des Benutzers detektiert wird, bevor das Zeitglied einen vorgegebenen Wert erreicht;
(d) den vorgegebenen Wert zu erhöhen (222), falls eine Bewegung des Benutzers innerhalb eines vorgegebenen Zeitintervalls seit der Änderung des Zustands der mindestens einen Vorrichtung (118) in Schritt (c) detektiert wird, wobei eine Detektierung in Schritt (d) Falsch-Negativ anzeigt und die Steuerung ferner betreibbar ist, um
(e) den vorgegebenen Wert nach einer vorgegebenen Zeit automatisch zu verringern, **dadurch gekennzeichnet, dass**
die vorgegebene Zeit ab dem Moment der letzten Detektierung von Falsch-Negativ gezählt wird.

6. System (100) nach Anspruch 5, ferner eine Benutzerschnittstelle (108) zum Empfangen einer Benutzereingabe zum Festlegen des vorgegebenen Wertes aufweisend.

7. System (100) nach Anspruch 5, ferner eine Anzeige zum Bereitstellen (224) einer Anzeige, dass Schritt (d) stattgefunden hat, aufweisend.

8. System (100) nach Anspruch 5, ferner einen Detektor (104) zum Detektieren der Bewegung eines Benutzers aufweisend.

## Revendications

1. Procédé pour vérifier l'état d'au moins un dispositif (118), procédé comprenant les étapes suivantes consistant à :
(a) démarrer (200) une horloge (112),
(b) remettre à zéro (204) l'horloge (112) lors de la détection de la présence d'un utilisateur,
(c) changer (214) l'état du dispositif (118) si aucun mouvement de l'utilisateur est détecté avant que l'horloge atteint une valeur prédéterminée,
(d) augmenter (222) la valeur prédéterminée si un mouvement de l'utilisateur est détecté dans un intervalle de temps prédéterminé du changement d'état du dispositif (118) dans l'étape (c), la détection dans l'étape (d) indiquant un faux négatif, et comprenant en plus l'étape
(e) consistant à diminuer automatiquement la valeur prédéterminée après un temps prédéterminé, procédé
**caractérisé en ce que** le temps prédéterminé est compté à partir du moment de la dernière détection d'un faux négatif.

2. Procédé selon l'une des revendications 1, **caractérisé en ce qu'**en outre il permet à l'utilisateur de changer la valeur prédéterminée.

3. Procédé selon l'une des revendications 1, **caractérisé en ce qu'**il comporte en outre de fournir (224) d'une indication pour indiquer que l'étape (d) s'est produite.

4. Produit-programme d'ordinateur comportant un ensemble de parties de codes programme pour exécuter le procédé selon l'une quelconque des revendications précédentes.

5. Système (100) de vérification de l'état d'au moins un dispositif (118), le système comportant :
une horloge (112),
un dispositif de vérification (106) pour :
(a) démarrer (200) l'horloge (112),
(b) remettre (204) l'horloge (112) à l'état initial lors de la détection du mouvement d'un utilisateur,
(c) changer (214) l'état du dispositif (118) si aucun de mouvement de l'utilisateur a été détecté avant que le temps n'atteigne une valeur prédéterminée,
(d) augmenter (222) la valeur prédéterminée si un mouvement de l'utilisateur est détecté dans un intervalle de temps prédéterminé du changement de l'état du dispositif (118) dans l'étape (c), cette détection dans l'étape (d) indiquant un faux négatif et, en outre, le dispositif peut,
(e) diminuer automatiquement la valeur prédéterminée après un temps prédéterminé,
dispositif **caractérisé en ce que** le temps prédéterminé est compté à partir du moment de la dernière détection d'un faux négatif.

6. Système (100) selon la revendication 5, comportant une interface d'utilisateur (108) pour recevoir une entrée d'utilisateur pour définir la valeur prédéterminée.

7. Système (100) selon la revendication 5, **caractérisé en ce qu'**il comporte en outre un indicateur pour fournir une indication (224) indiquant que l'étape (d) a été effectuée.

8. Système (100) selon la revendication 5, comportant en outre un détecteur (104) pour détecter le mouvement d'un utilisateur.
